# EUROPÄISCHE PATENTSCHRIFT

(11) **EP 0 335 859 B1**
(45) Veröffentlichungstag und Bekanntmachung des Hinweises auf die Patenterteilung: **21.07.1993**
(21) Anmeldenummer: 89890082.4
(22) Anmeldetag: 20.03.1989
(51) Int. Cl.: G01N 35/00, G01N 27/26

(54) **Vorrichtung zur Messung von in einer Probe vorliegenden Probenbestandteilen**
Device for determining components in a sample
Dispositif de mesure de composants présents dans un échantillon

(30) Priorität: 28.03.1988 AT 830/88
(43) Veröffentlichungstag der Anmeldung: 04.10.1989
(73) Patentinhaber: AVL Medical Instruments AG, 8207 Schaffhausen (CH)
(72) Erfinder: Marsoner, Hermann, Dipl.-Ing. Dr., A-8153 Steinberg (AT); Fischer, Fritz, A-8041 Graz (AT); Kleinhappl, Erich, A-8044 Graz (AT)
(74) Vertreter: Krause, Walter, Dr. Dipl.-Ing.

(56) Entgegenhaltungen:
- EP-A- 0 052 718
- EP-A- 0 126 007
- EP-A- 0 163 976
- EP-A- 0 167 706
- AT-B- 381 794
- US-A- 4 097 921
- BIOMEDIZINISCHE TECHNIK, Band 30, Nr. 11, November 1985, Seiten 302-306, Berlin, DE; H.J. MARSONER: "Elektrolytanalyse in Körperflüssigkeiten mit ionensensitiven Sensoren (Teil I)"

## Beschreibung

Die Erfindung betrifft eine Vorrichtung zur indirekten Messung von in einer Probe vorliegenden Probenbestandteilen, mit einer mit einem Sensor in Kontakt stehenden Meßkammer, welche mit einer Mischkammer über einen Kanal in Verbindung steht, wobei an die einen Magnetrührer aufweisende Mischkammer ein Probenkanal und ein Reagenzmittelkanal angeschlossen sind.

Der Begriff indirekte Messung soll in diesem Zusammenhang so verstanden werden, daß die Probe vor der Messung eines interessierenden Probenbestandteiles in einem bestimmten Volumsverhältnis mit einem Reagenzmittel vermischt und dadurch modifiziert wird, wobei die gewünschte Größe indirekt, beispielsweise über eine Änderung des pH-Wertes oder über ein proportional zur vorliegenden Menge des interessierenden Probenbestandteiles entstehendes Reaktionsprodukt, auf welches der eingesetzte Sensor anspricht, gemessen wird. Direkte Messung bedeutet dementsprechend, daß der eingesetzte Sensor in der Lage ist, den interessierenden Probenbestandteil ohne Modifikation oder Veränderung des Probenmaterials, direkt durch ein spezifisches Meßelement in ein auswertbares Signal umzuwandeln.

Herkömmliche Vorrichtungen bzw. Verfahren zur indirekten Messung von in einer Probe vorliegenden Probenbestandteilen erfordern einen relativ großen manipulativen bzw. apparativen Aufwand im Hinblick auf die Probenvorbereitung, welche der eigentlichen Messung vorausgeht. Die Einhaltung optimaler reproduzierbarer Parameter bzw. Meßbedingungen wird dadurch erschwert. Zusätzlich sind für die einzelnen Vermischungs und Reaktionsschritte relativ große Probenmengen notwendig, was insbesondere für jene Analysenbereiche, wie beispielsweise für medizinische Analysen, wo nur geringe Probenmengen zur Verfügung stehen, von Nachteil ist.

In diesem Zusammenhang ist aus der EP-A 0 052 718 eine Vorrichtung der eingangs genannten Art bekannt geworden, welche zur Messung der Konzentration von chemischen Substanzen, wie Glucose, Harnstoff, Enzyme, etc. in biologischen Verbindungen dient. Hier wird der Probe in der in einer Küvette angeordneten Mischkammer ein Reagenzmittel zugeführt und die Reaktion durch einen in der Mischkammer angeordneten Magnetrührer beschleunigt. Aus der Änderung des pH-Wertes nach Zugabe des Reaktionsmittels wird in einer mit der Küvette verbundenen Meßzelle ein Signal gewonnen, welches in funktionalem Zusammenhang mit der Konzentration der zu messenden Substanz steht. Die Küvette mit der Mischkammer weist weiters einen Motor zum Antrieb des Magnetrührers auf, wodurch dieser Bauteil kompliziert aufgebaut ist und zum Teil lange Verbindungswege, beispielsweise zwischen Mischkammer und eigentlicher Meßkammer, entstehen.

Weiters ist aus der AT-PS 381 794 ein Analysengerät zur Messung flüssiger oder gasförmiger Proben bekannt, welches im dargestellten Ausführungsbeispiel drei zu einem Sensorblock zusammengefaßte Sensormodule aufweist, die von einem als zentrale Kapillarbohrung ausgeführten Probenkanal durchsetzt werden.

Als Sensormodule können insbesondere aus der AT-PS 363 263 bekannte ionensensitive Kapillarelektroden verwendet werden, welche auch zu einem Sensorblock zusammengespannt werden können.

Die aus letzteren Druckschriften bekannten Sensormodule eignen sich jedoch nur für die direkte Messung eines interessierenden Probenbestandteiles, eine indirekte Messung ist mit dieser bekannten Vorrichtung nicht möglich.

Weiters ist aus der EP-A 0 163 976 eine Meßvorrichtung ähnlich jener aus der AT-PS 381 794 bekannt, wobei der auffälligste Unterschied darin liegt, daß die Probe und die Eichreagenzien von der jeweils entgegengesetzten Seite des Sensormodules eingesaugt werden, wodurch die am Ende des Sensormodules angeordnete Referenzelektrode nachteiligerweise das Meßmedium kontaminiert, wenn von dieser Seite angesaugt wird. Ein Sensormodul zur indirekten Messung ist auch in dieser Meßvorrichtung nicht vorhanden.

Aufgabe der vorliegenden Erfindung ist es, eine Meßvorrichtung vorzuschlagen, mit welcher ohne großem apparativem Aufwand reproduzierbare indirekte Messungen von in einer Probe vorliegenden Probenbestandteilen durchgeführt werden können, wobei eine kompakte Anordnung von Mischkammer und Meßkammer angestrebt wird, sodaß bereits kleine Proben- und Reagenzmittelvolumina zur Gewinnung eines Meßwertes ausreichen. Weiters soll die Mischkammer für Reinigungs- und/oder Reparaturzwecke einfach aus der Vorrichtung entnehmbar sein.

Diese Aufgabe wird erfindungsgemäß dadurch gelöst, daß die Meßkammer und die Mischkammer im Gehäuse eines Sensormoduls angeordnet sind, daß das Gehäuse des Sensormoduls einen auswechselbaren Mischerteil aufweist, in welchem die Mischkammer mit dem Magnetrührer angeordnet ist, sowie daß zwei im Mischerteil angeordnete, von einer Magnetspule außerhalb des Sensormoduls ausgehende und auf die Mischkammer gerichtete Magnetleiter vorhanden sind. Durch den modulartigen Aufbau der Mischvorrichtung, können die Proben- und Reagenzmittelwege im Sensormodul kurz gehalten werden, sodaß gemeinsam mit der kompakten Anordnung von Misch- und Meßkammer nur geringste Proben- und Reagenzmittelmengen benötigt werden. Je nach Art der zu messenden Probenbestandteile können Sensoren mit unterschiedlichen Meßprinzipien in das Sensormodul eingesetzt werden. Durch die Vermischung der Probe mit einem oder mehreren gleichzeitig über den Reagenzmittelkanal zugeführten Reagenzien liegt nach deren Reaktion ein vom Sensor erfaßbares Reaktionsprodukt vor.

Dadurch, daß die magnetische Kraft zum Antrieb des Magnetrührers über Magnetleiter an die Mischkammer herangeführt wird, kann der die Mischkammer beinhaltende Mischerteil sehr kompakt hergestellt werden. Ein Entnehmen des Mischerteils, beispielsweise um diesen zu reinigen oder abgenützte Teile zu ersetzen bzw. den gesamten Mischerteil gegen einen neuen auszuwechseln, ist nach Ausbau des Sensormoduls aus der Meßvorrichtung ohne Schwierigkeiten möglich.

Zur besseren Austauschbarkeit eines oder mehrerer in einer Sensoranordnung vorliegender Sensormodule ist erfindungsgemäß vorgesehen, daß das Sensormodul in an sich bekannter Weise mittels eines Anpreßmechanismus gegen ein feststehendes Widerlager eines Sensorblocks spannbar ist, wobei der Probenkanal an einen Kanalabschnitt im Widerlager dicht anschließbar ist, sowie daß die Magnetspule in einem Druckkörperteil des Anpreßmechanismus angeordnet ist, welcher mittels Federelementen an den Mischerteil anpreßbar ist, sowie daß im Druckkörperteil von der Magnetspule wegführende Magnetleiter vorhanden sind, welche an den Magnetleitern im Mischerteil anliegen.

Das Auswechseln des Mischerteils wird erfindungsgemäß dadurch erleichtert, daß das Gehäuse des Sensormoduls an seiner einer Grundplatte zugewandten Seite einen federnden Halteknopf aufweist, welcher den auswechselbaren Mischerteil nach dessen Einsetzen in das Gehäuse in Richtung der Meßkammer dichtend anpreßt.

Der Mischerteil des Sensormoduls weist erfindungsgemäße einen die Mischkammer abschließenden Verschlußteil auf, dessen zentrale Bohrung gegen den Kanal zur Meßkammer abgedichtet ist, wobei der Verschlußteil einen in die Mischkammer ragenden zylinderförmigen Fortsatz aufweist. Dieser Verschlußteil bringt insbesondere für den Mischerteil herstellungstechnische Vorteile, wobei im eingebauten Zustand gleichzeitig Abdicht- und Schutzfunktionen für die Mischkammer erfüllt werden.

Es ist natürlich auch möglich, daß der Sensor in einen Teil der Mischkammer ragt, welcher als Meßkammer ausgebildet ist. Dies wird insbesondere dann der Fall sein, wenn Reagenzmittel verwendet werden, welche keinen schädigenden Einfluß auf den Sensor bzw. die Sensormembran ausüben. Es muß lediglich dafür gesorgt sein, daß mechanische Beschädigungen des Sensors durch einen gegebenenfalls vorhandenen Magnetrührer verhindert werden.

Besonders homogene Mischergebnisse bzw. rasch ablaufende Reaktionen werden dadurch erzielt, daß die Einmündung des Reagenzmittelkanals in den Probenkanal in Fließrichtung der Probe kurz vor der Mischkammer erfolgt.

In einer besonders vorteilhaften Weiterbildung der Erfindung ist vorgesehen, daß zwischen das feststehende Widerlager des Sensorblocks und das Sensormodul zur indirekten Messung von Probenbestandteilen zumindest ein an sich bekanntes Sensormodul zur direkten Messung von Probenbestandteilen einfügbar ist, dessen ein Anschluß dichtend an den Probenkanal des benachbarten Sensormoduls und dessen anderer Anschluß dichtend an den Kanalabschnitt im Widerlager anschließt. Vorteilhafterweise können dabei zur direkten Messung von Probenbestandteilen Sensoren verwendet werden, welche in den AT-PSen 363 263, 379 318, sowie 380 741 ausführlich beschrieben sind. So weist insbesondere die ionensensitive Membranelektrode zur Messung der Ionenkonzentration einer Probe nach der AT-PS 379 318, sowie die eingangs genannte ionensensitive Kapillarelektrode nach der AT-PS 363 263 einen das Sensormodul axial durchsetzenden Probenkanal auf, sodaß sich diese Sensoren besonders dafür eignen, aneinandergereiht in einem Sensorblock, in Verbindung mit dem erfindungsgemäßen Sensormodul, zur indirekten Messung eingesetzt zu werden. Es kann damit eine im folgenden noch genauer zu beschreibende Meßvorrichtung zur gemeinsamen indirekten und direkten Messung von Probenbestandteilen einer Probe realisiert werden.

Weiters wird erfindungsgemäß vorgeschlagen, daß bei Verwendung zumindest einer elektrochemischen Elektrode in einem der Sensormodule der Kanalabschnitt im Widerlager aus einem elektrisch leitenden Material ausgeführt und mit einem elektrisch leitenden Kabel verbunden ist. Die Probe kann damit auf ein bestimmtes Potential, beispielsweise auf Erdpotential, gebracht werden. Es ist natürlich auch möglich, in die einzelnen Sensormodule geeignete optische Sensoren oder Optoden einzusetzen, wobei dann natürlich keinerlei Erdungs- oder Referenzelektroden notwendig sind.

Eine Ausgestaltung nach der Erfindung sieht vor, daß das Sensormodul einen CO₂-Sensor zur Messung des Gesamt-CO₂-Gehaltes einer Blutserumprobe aufweist. Das gesamte CO₂ besteht in einer Blutserumprobe aus gelöstem CO₂ und dem Bicarbonatgehalt der Probe. Das im Bicarbonat chemisch gebundene CO₂ wird dabei durch ein saures Reagenzmittel, das zugemischt wird, ausgetrieben. Es entsteht dadurch ein hoher Partialdruck des molekular gelösten CO₂, der mit dem CO₂-Sensor gemessen wird. Dieses Prinzip kann natürlich auf viele andere Reaktionen angewandt werden, beispielsweise zur Messung des Gesamtgehaltes an Ca-Ionen. Dabei kann es insbesondere dann wenn die zu messende Substanz gasförmig anfällt von Vorteil sein, wenn die Meßkammer vertikal über der Mischkammer angeordnet ist.

Bei einer Meßvorrichtung mit einer mit dem Probenkanal des Sensormoduls verbundenen Eingabeeinrichtung für Proben- und Standardmedien, Behälter für die Standardmedien, sowie einer Förderpumpe zum Transport der einzelnen Medien, wird erfindungsgemäß vorgeschlagen, daß die von einem Reagenzmittelbehälter zum Reagenzmittelkanal des Sensormoduls führende Schlauchleitung, sowie die von der Eingabeeinrichtung zum Probenkanal des Sensormodules führende Schlauchleitung über eine gemeinsame Schlauchpumpe geführt sind. Ausgehend von der aus der AT-PS 381 794 bekannten Meßeinrichtung gelangt man durch die oben angeführten Verbesserungen zu einer Meßeinrichtung zur gemeinsamen direkten und indirekten Messung von in einer Probe vorliegenden Probenbestandteilen. Durch die Anordnung der für die Proben- und Reagenzmittel gemeinsamen Schlauchpumpe vor dem Sensorblock wird für ein konstantes Mischverhältnis zwischen beiden Substanzen gesorgt, wobei erfindungsgemäß das für den Reaktionsablauf benötigte Mischungsverhältnis zwischen Probe und Reagenzmittel durch das Verhältnis der Querschnitte der zum Reagenzmittelkanal und zum Probenkanal führenden Schlauchleitungen definiert sein kann.

Vorteilhafterweise kann das Reagenzmittel gleichzeitig als Referenzmedium verwendet werden, wenn bei Verwendung zumindest eines elektrochemischen Sensors in einem der Sensormodule im Reagenzmittelkanal, vorzugsweise außerhalb des Sensorblocks, eine Referenzelektrode angeordnet ist.

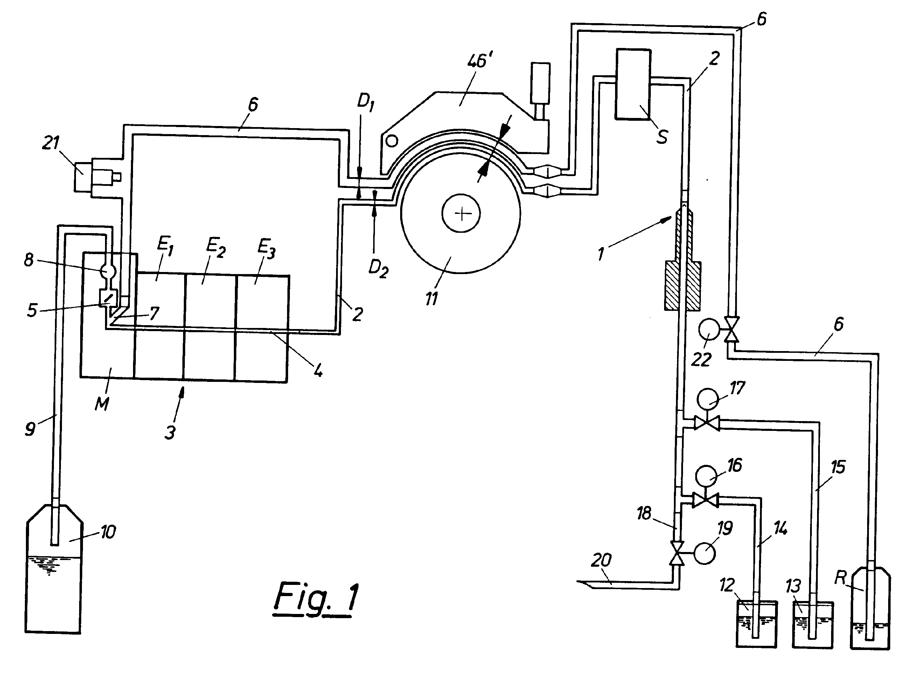

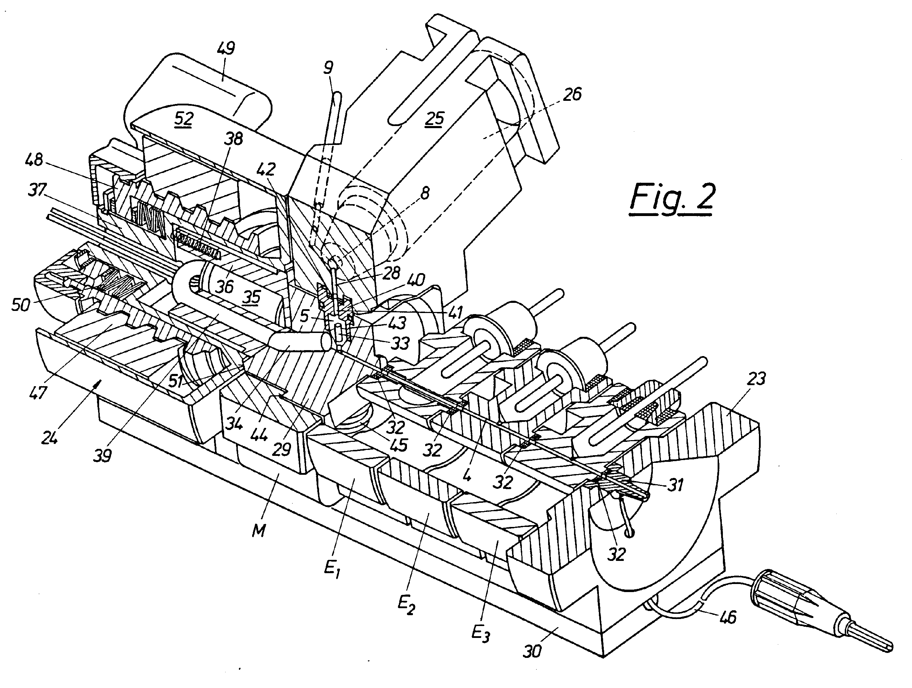

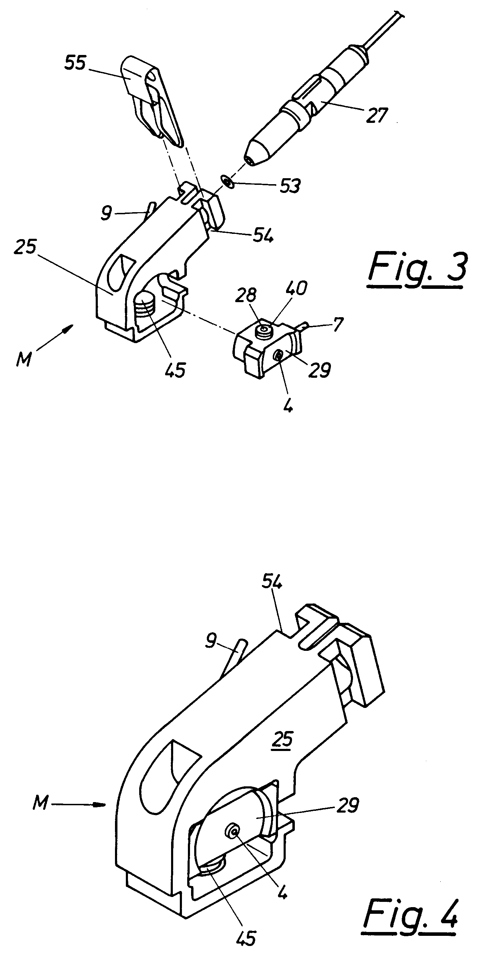

Die Erfindung wird im folgenden anhand eines Ausführungsbeispieles näher erläutert. Es zeigen Fig. 1 eine Vorrichtung nach der Erfindung in schematischer Darstellung, Fig. 2 einen Sensorblock der erfindungsgemäßen Vorrichtung teilweise geschnitten, sowie die Fig. 3 und 4 ein Sensormodul aus dem Sensorblock nach Fig. 2 im Detail.

Fig. 1 zeigt eine Vorrichtung zur Messung von in einer Probe vorliegenden Probenbestandteilen mit einer Probeneingabeeinrichtung 1, welche bereits aus der eingangs genannten AT-PS 381 794 bekanntgeworden ist, welche zur Einbringung einer Probe in den Analysenweg von einer hier dargestellten Grundposition in eine Aufnahmeposition verstellbar ist. Die Probeneingabeeinrichtung 1 ist über eine Schlauchleitung 2, in die eine Lichtschranke S zur Überprüfung des Proben- bzw. Standardmediumdurchgangs eingeschaltet ist, mit einem Sensorblock 3 verbunden. Der Sensorblock 3 weist im dargestellten Beispiel drei Sensormodule E₁, E₂ und E₃ zur direkten sowie ein Sensormodul M zur indirekten Messung von Probenbestandteilen auf, welche über einen als zentrale Kapillarbohrung ausgeführten Probenkanal 4 miteinander verbunden sind und von der durchfließenden Probe beaufschlagt werden.

Im dargestellten Beispiel weisen die Sensormodule E₁, E₂, E₃ und M - wie in Fig. 2 noch näher dargestellt - elektrochemische Sensoren bzw. Elektroden auf, es sind jedoch auch optische Sensoren in einer Vorrichtung nach der Erfindung denkbar. Die Sensoren weisen hier nicht weiter dargestellte Signalleitungen auf, welche jeweils der zu messenden Größe proportionale Meßsignale zur Auswertung abgeben.

Aus einem Behälter R für ein Reagenzmittel wird das für die Reaktion in der Mischkammer 5 des Sensormoduls M zur indirekten Messung von Probenbestandteilen benötigte Reagenzmittel über eine Schlauchleitung 6, welche mittels eines Steuerventils 22 geöffnet bzw. geschlossen werden kann, zum Reagenzmittelkanal 7 des Sensormoduls M geführt. Nach der Vermischung von Probe und Reagenzmittel gelangt das Gemisch in die Meßkammer 8 und von dort über eine Leitung 9 in einen Abfallbehälter 10. Über eine in Fließrichtung der Medien vor dem Sensorblock 3 angeordneten Schlauchpumpe 11 mit einem abnehmbaren Anpreßbügel 46' werden sowohl die Schlauchleitung 6 für das Reagenzmittel als auch die Schlauchleitung 2 für die Probe geführt, wobei durch das Verhältnis der Querschnitte D₁, D₂ der Schlauchleitungen 2 und 6 das Mischverhältnis für das Proben-Reagenzgemisch bestimmt wird.

Zusätzlich zum Behälter R für das Reagenzmittel sind noch zwei weitere Behälter 12, 13 in der Meßeinrichtung vorgesehen, welche bestimmte unterschiedliche Standardlösungen od. dgl. enthalten und über Schlauchleitungen 14, 15 und Steuerventile 16, 17 mit einer Zuleitung 18 zur Probeneingabeeinrichtung 1 in Verbindung stehen. Die Zuleitung 18 weist auch eine über ein weiteres Steuerventil 19 verschließbare Öffnung 20 zum Ansaugen von Luft auf.

Falls in zumindest einem der Sensormodule E₁, E₂, E₃ oder M eine elektrochemische Elektrode verwendet wird, kann die zugehörige Referenzelektrode 21 außerhalb des Sensorblocks 3 direkt in den Reagenzmittelkanal 7 oder wie in Fig. 1 dargestellt in die das Reagenzmittel führende Schlauchleitung 6 eingeschaltet werden. Das Reagenzmittel wird somit gleichzeitig als Referenzlösung eingesetzt.

Eine Kombination aus einem indirekt messenden Sensormodul M und aus direkt messenden Sensormodulen E₁, E₂, E₃, geht aus dem in Fig. 2 im Detail dargestellten Sensorblock 3 hervor. Zwischen einem feststehenden Widerlager 23 und einem in axialer Richtung verschiebbaren Anpreßmechanismus 24, sind die an sich bekannten Sensormodule E₁ bis E₃ und ein noch näher zu beschreibendes Sensormodul M zur indirekten Messung eines Probenbestandteils angeordnet. Das Widerlager 23 sowie der Anpreßmechanismus 24 sind dabei mit einer Grundplatte 30 fest verschraubt. Es wären natürlich in einer abgeänderten Form auch Sensoranordnungen denkbar, bei welchen das Sensormodul M direkt gegen das Widerlager 23 gespannt wird. Das Widerlager 23 weist einen Kanalabschnitt 31 auf, mit welchem der Probenkanal 4 des jeweils am Widerlager anliegenden Sensormoduls unter Zwischenlage eines Dichtelements 32 in Verbindung steht. Der Kanalabschnitt 31 ist elektrisch leitend ausgeführt und mit einem elektrischen Anschlußkabel 46 verbunden. Über dieses Anschlußkabel kann der Kanalabschnitt 31 mit einem definierten elektrischen Potential verbunden werden. Da die Probe den Kanalabschnitt 31 durchströmt, kann sie damit auf ein bestimmtes elektrisches Potential gebracht werden. Dies wird in der Regel zur Erdung der Probe genutzt werden.

Das Sensormodul M weist ein Gehäuse 25 mit einer Öffnung 26 zum Einsetzen eines aus Fig. 3 ersichtlichen elektrochemischen Sensors 27 auf. Der eingesetzte Sensor 27 begrenzt mit seiner Sensormembran die Meßkammer 8, von welcher ein Kanal 28 zu der in einem auswechselbaren Mischerteil 29 angeordneten Mischkammer 5 führt. In der Mischkammer 5 befindet sich ein Magnetrührer 33, welcher über im Mischerteil 29 angeordneten nicht permanent magnetische Magnetleiter 34 in Bewegung versetzt wird.

Die Magnetspule 35 zur Versorgung der Magnetleiter 34 ist in einem Druckkörperteil 36 angeordnet. Dieser Druckkörperteil 36 befindet sich in einer Ausnehmung des Druckkörpers 37 des Anpreßmechanismus 24 und wird mittels eines sich am Druckkörper 37 abstützenden Federelementes 38 gegen den auswechselbaren Mischerteil 29 gedrückt, wobei von der Magnetspule 35 wegführende, im Druckkörperteil 36 angeordnete, Magnetleiter 39 mit jenen im Mischerteil 29 in Kontakt kommen (in der dargestellten Schnittebene ist jeweils nur ein ferromagnetischer, nicht permanent magnetischer Magnetleiter 34, 39 sichtbar).

Der Mischerteil 29 weist einen die Mischerkammer 5 in Richtung Meßkammer 8 abschließenden Verschlußteil 40 auf, dessen zentrale Bohrung 41 mittels einer Dichtung 42 gegen den Kanal 28 zur Meßkammer 8 abgedichtet ist. Ein in die Mischkammer 5 ragender zylindermantelförmiger Fortsatz 43 des Verschlußteils 40 schützt die Wände der Mischkammer vor den vom Magnetrührer verursachten Abnützungen. Zur Entnahme des Mischerteils 29 aus dem Gehäuse 25 muß dieser zunächst gegen die Kraft eines federnden Halteknopfes 45 nach unten gedrückt werden und kann dann in Richtung der Achse des Probenkanals 4 aus dem Gehäuse 25 entnommen und ausgewechselt werden, wie in Fig. 3 im Detail dargestellt wird. Nach dem Einsetzen eines neuen Mischerteils wird dieser nach Anlage an einem Absatz 44 im Gehäuse 25 vom federnden Halteknopf 45 in Richtung Meßkammer dichtend angepreßt.

Sobald die Magnetspule 35 mit einer Wechselspannung geeigneter Frequenz erregt wird und das dadurch entstehende magnetische Feld über die Magnetleiter 39, 34 in den Bereich der Mischkammer 5 geführt wird, beginnt der Magnetrührer 33 eine taumelnde Bewegung auszuführen. Von der Rückseite des Mischerteils 29 im Bezug auf die in Fig. 3 dargestellte Ansicht führt der Reagenzmittelkanal 7 in den Mischerteil und mündet knapp vor der Mischkammer in den Probenkanal 4. Durch den Kanal 7 wird der Probe ein Reagenzmittel zugemischt, welches in der Mischkammer mit der Probe innig durchmischt wird. Durch diese Vermischung und die folgende Reaktion entsteht ein Reaktionsprodukt, welches in einem bekannten quantitativen Verhältnis zu dem Probenbestandteil steht, der zu messen ist, wobei dieses Reaktionsprodukt durch den in die Meßkammer 5 ragenden Sensor 27 gemessen werden kann. Der Abfluß des Proben-Reagenz-Gemisches erfolgt durch die Leitung 9 in den Abfallbehälter 10 (Fig. 1).

Der Anpreßmechanismus 24 erlaubt ein axiales Zusammenpressen der Sensormodule E₁, E₂, E₃ sowie M, sodaß die Dichtelemente 32 längs des Probenkanals 4 in dichtenden Eingriff gelangen. Die axiale Verschiebung des Druckkörpers 37 wird mit Hilfe einer an der Grundplatte 30 befestigten Gewindeschraube 47 und einer beweglichen Gewindeschraube 48 bewerkstelligt, wobei letztere 48 mit dem Hebel 49 in Drehung versetzt werden kann und über Druckfedern 50 auf den Druckkörper 37 wirkt. In der gezeichneten Position des Hebels 49 ist der Druckkörper 37 gegen die Kraft der Federn 50 in axialer Richtung so vorgespannt, daß er über den Ansatz 51 die Sensormodule zusammenpreßt bzw. den Mischerteil 29 an das benachbarte Sensormodul E₁ anpreßt. Ein Teil des Druckkörpers 37 ist als Abdeckung 52 des Anpreßmechanismus ausgeführt.

Fig. 3 zeigt die einzelnen Teile des aus dem Sensorblock entnommenen Sensormoduls M, welches aus einem Gehäuse 25 besteht, in das einerseits ein Mischerteil 29 und andererseits der für die Messung verwendete Sensor 27 eingeschoben werden kann, welcher im Inneren gegen die Meßkammer durch den Dichtungsring 53 abgedichtet ist und mit einer in einer Nut 54 im Gehäuse 25 einrastenden Halteklammer 55 verriegelt ist. Am Mischerteil 29 sind der Probenkanal 4, der Reagenzmittelkanal 7, sowie der im Verschlußteil 40 angeordnete Kanal 28 sichtbar. Der Mischerteil 29 kann - wie bereits beschrieben - von der Ansichtsseite aus in das Gehäuse des Sensormoduls M eingeschoben werden und wird dabei durch den federnden Halteknopf 45 arretiert.

Fig. 4 zeigt das Sensormodul M mit eingebautem Mischerteil 29.

## Patentansprüche

1. Vorrichtung zur indirekten Messung von in einer Probe vorliegenden Probenbestandteilen, mit einer mit einem Sensor in Kontakt stehenden Meßkammer (8), welche mit einer Mischkammer (5) über einen Kanal (28) in Verbindung steht, wobei an die einen Magnetrührer (33) aufweisende Mischkammer (5) ein Probenkanal (4) und ein Reagenzmittelkanal (7) angeschlossen sind, dadurch gekennzeichnet, daß die Meßkammer (8) und die Mischkammer (5) im Gehäuse (25) eines Sensormoduls (M) angeordnet sind, daß das Gehäuse (25) des Sensormoduls (M) einen auswechselbaren Mischerteil (29) aufweist, in welchem die Mischkammer (5) mit dem Magnetrührer (33) angeordnet ist, sowie daß zwei im Mischerteil (29) angeordnete, von einer Magnetspule (35) außerhalb des Sensormoduls (M) ausgehende und auf die Mischkammer (5) gerichtete Magnetleiter (34) vorhanden sind.

2. Vorrichtung nach Anspruch 1, dadurch gekennzeichnet, daß das Sensormodul (M) mittels eines Anpreßmechanismus (24) gegen ein feststehendes Widerlager (23) eines Sensorblocks (3) spannbar ist, wobei der Probenkanal (4) an einen Kanalabschnitt (31) im Widerlager (23) dicht anschließbar ist, sowie daß die Magnetspule (35) in einem Druckkörperteil (36) des Anpreßmechanismus (24) angeordnet ist, welcher mittels Federelementen (38) an den Mischerteil (29) anpreßbar ist, sowie daß im Druckkörperteil (36) von der Magnetspule (35) wegführende Magnetleiter (39) vorhanden sind, welche an den Magnetleitern (34) im Mischerteil (29) anliegen.

3. Vorrichtung nach Anspruch 1 oder 2, dadurch gekennzeichnet, daß das Gehäuse (25) des Sensormoduls (M) an seiner einer Grundplatte (30) zugewandten Seite einen federnden Halteknopf (45) aufweist, welcher den auswechselbaren Mischerteil (29) nach dessen Einsetzen in das Gehäuse (25) in Richtung der Meßkammer (8) dichtend anpreßt.

4. Vorrichtung nach einem der Ansprüche 1 bis 3, dadurch gekennzeichnet, daß der Mischerteil (29) einen die Mischkammer (5) abschließenden Verschlußteil (40) aufweist, dessen zentrale Bohrung (41) gegen den Kanal (28) zur Meßkammer (8) abgedichtet ist, sowie daß der Verschlußteil (40) einen in die Mischkammer (5) ragenden zylindermantelförmigen Fortsatz (43) aufweist.

5. Vorrichtung nach einem der Ansprüche 1 bis 4, dadurch gekennzeichnet, daß die Einmündung des Reagenzmittelkanals (7) in den Probenkanal (4) in Fließrichtung der Probe kurz vor der Mischkammer (5) erfolgt.

6. Vorrichtung nach einem der Ansprüche 2 bis 5, dadurch gekennzeichnet, daß zwischen das feststehende Widerlager (23) des Sensorblocks (3) und das Sensormodul (M) zur indirekten Messung von Probenbestandteilen zumindest ein Sensormodul (E₁, E₂, E₃) zur direkten Messung von Probenbestandteilen einfügbar ist, dessen ein Anschluß dichtend an den Probenkanal (4) des benachbarten Sensormoduls (M, E₁, E₂) und dessen anderer Anschluß dichtend an den Kanalabschnitt (31) im Widerlager (23) anschließt.

7. Vorrichtung nach einem der Ansprüche 2 bis 6, dadurch gekennzeichnet, daß bei Verwendung zumindest einer elektrochemischen Elektrode (27) in einem der Sensormodule (E₁, E₂, E₂, M) der Kanalabschnitt (31) im Widerlager (23) aus einem elektrisch leitenden Material ausgeführt und mit einem elektrisch leitenden Kabel (46) verbunden ist.

8. Vorrichtung nach einem der Ansprüche 1 bis 7, dadurch gekennzeichnet, daß das Sensormodul (M) einen CO₂-Sensor zur Messung des Gesamt-CO₂-Gehaltes einer Blutserumprobe aufweist.

9. Vorrichtung nach einem der Ansprüche 6 bis 8, mit einer mit dem Probenkanal (4) des Sensormoduls (E₁, E₂, E₃, M) verbundenen Eingabeeinrichtung (1) für Proben- und Standardmedien, Behälter (12, 13) für die Standardmedien, sowie einer Förderpumpe zum Transport der einzelnen Medien, dadurch gekennzeichnet, daß die von einem Reagenzmittelbehälter (R) zum Reagenzmittelkanal (7) des Sensormoduls (M) führende Schlauchleitung (6), sowie die von der Eingabeeinrichtung (1) zum Probenkanal (4) des Sensormodules (M) führende Schlauchleitung (2) über eine gemeinsame Schlauchpumpe (11) geführt sind.

10. Vorrichtung nach Anspruch 9, dadurch gekennzeichnet, daß das für den Reaktionsablauf benötigte Mischungsverhältnis zwischen Probe und Reagenzmittel durch das Verhältnis der Querschnitte (D₁, D₂) der zum Reagenzmittelkanal (7) und zum Probenkanal (4) führenden Schlauchleitungen (6, 2) definiert ist.

11. Vorrichtung nach Anspruch 9 oder 10, dadurch gekennzeichnet, daß bei Verwendung zumindest eines elektrochemischen Sensors (27) in einem der Sensormodule (E₁, E₂, E₃, M) im Reagenzmittelkanal (7) eine Referenzelektrode (21) angeordnet ist.

## Claims

1. Apparatus for indirect measurement of the components of a sample, with a measuring chamber (8) in contact with a sensor, said measuring chamber (8) being connected to a mixing chamber (5) by means of a channel (28), and the mixing chamber (5), which is provided with a magnetic stirrer (33), being connected with a sample channel (4) and a reagent channel (7), **wherein** the measuring chamber (8) and the mixing chamber (5) are placed in the housing (25) of a sensor module (M), and wherein the housing (25) of said sensor module (M) is provided with a removable mixer part (29) containing the mixing chamber (5) with the magnetic stirrer (33), and, further, wherein two magnetic field guides (34) are provided, which are positioned in the mixer part (29), and are connected to a magnet coil (35) outside of the sensor module (M), and are directed towards the mixing chamber (5).

2. Apparatus as in claim 1, **wherein** the sensor module (M) is pressed against a stationary end piece (23) of a sensor block (3) by means of a tightening mechanism (24), the sample channel (4) being sealingly connectable to a channel section (31) in said end piece (23), and wherein the magnet coil (35) is located in a pressure element (36) of the tightening mechanism (24), which may be pressed against the mixer part (29) by spring elements (38), and wherein magnetic field guides (39) departing from the magnet coil (35) are located in the pressure element (36), which are brought into contact with the magnetic field guides (34) in the mixer part (29).

3. Apparatus as in claim 1 or 2, **wherein** the housing (25) of the sensor module (M) is provided with a spring-loaded arresting knob (45) on its side facing a base plate (30), by which knob (45) the removable mixer part (29) is sealingly pressed against the measuring chamber (8) after its insertion into the housing (25).

4. Apparatus as in any of claims 1 to 3, **wherein** the mixer part (29) is provided with a locking part (40) sealing the mixing chamber (5), whose centre bore (41) is sealed against the channel (28) towards the measuring chamber (8), and wherein said locking part (40) has a cylindrical stub (43) projecting into the mixing chamber (5).

5. Apparatus as in any of claims 1 to 4, **wherein** the reagent channel (7) opens into the sample channel (4) immediately in front of the mixing chamber (5) in the direction of sample flow.

6. Apparatus as in any of claims 2 to 5, **wherein** at least one sensor module (E₁, E₂, E₃) for direct measurement of sample components is inserted between the stationary end piece (23) of the sensor block (3) and the sensor module (M) for indirect measurement of sample components, one of the connections of the said sensor module for direct measurement being sealingly connected to the sample channel (4) of the adjacent sensor module (M, E₁, E₂), while the other one is sealingly connected to the channel section (31) in the end piece (23).

7. Apparatus as in any of claims 2 to 6, **wherein** the channel section (31) in the end piece (23) is made of electrically conductive material and is connected to an electric lead (46), if at least one electrochemical electrode (27) is used in one of the sensor modules (E₁, E₂, E₃, M).

8. Apparatus as in any of claims 1 to 7, **wherein** the sensor module (M) has a CO₂ sensor for measuring the total carbon dioxide in a sample of blood serum.

9. Apparatus as in any of claims 6 to 8, comprising a feeder device (1) for sample and standard media connected with the sample channel (4) of the sensor module (E₁, E₂, E₃, M), vessels (12, 13) for the standard media, and a feed pump for delivery of the individual media, **wherein** the tube (6) running from a reagent vessel (R) to the reagent channel (7) of the sensor module (M), and the tube (2) running from the feeder device (1) to the sample channel (4) of the sensor module (M) both are acted upon by a joint peristaltic pump (11).

10. Apparatus as in claim 9, **wherein** the mixing ratio between sample and reagent reqired for the reaction process is defined by the ratio of the cross-sections (D₁, D₂) of the tubes (6, 2) leading to the reagent channel (7) and the sample channel (4).

11. Apparatus as in claim 9 or 10, **wherein** a reference electrode (21) is located in one of the sensor modules (E₁, E₂, E₃, M) in the reagent channel (7), if at least one electrochemical sensor (27) is used.

## Revendications

1. Dispositif de mesure indirecte des composants contenus dans un échantillon, avec une chambre de mesure (8) en contact avec un capteur, cette chambre communiquant par un canal (28) avec une chambre de mélange (5), la chambre de mélange (5) équipée d'un agitateur magnétique (33) étant reliée à un canal à échantillons (4) et à un canal à réactif (7),
dispositif caractérisé en ce que la chambre de mesure (8) et la chambre de mélange (5) sont prévues dans un boîtier (25) d'un module de capteur (M), le boîtier (25) de ce module (M) ayant une partie de mélangeur (29) interchangeable, munie de la chambre de mélange (5) et de l'agitateur magnétique (33), deux conducteurs magnétiques (34) prévus dans la partie de mélangeur (29) partant d'une bobine électromagnétique (35) à l'extérieur du module de capteur (M) étant dirigés sur la chambre de mesure (5).

2. Dispositif selon la revendication 1, caractérisé en ce que le module de capteur (M) est serré à l'aide d'un mécanisme presseur (24) contre un appui fine (23) du bloc de capteurs (3), le canal d'échantillons (4) étant raccordé de manière étanche à un segment de canal (31) dans le palier (23), et la bobine électromagnétique (35) est prévue dans une partie (36) de l'organe de pression du mécanisme presseur (24), qui est pressée par des éléments à ressort (38) contre la partie de mélangeur (29), des conducteurs magnétiques (39) étant prévus qui partent de la bobine électromagnétique (35) dans la partie (36) de l'organe de compression, ces conducteurs étant appliqués contre les conducteurs magnétiques (34) de la partie de mélangeur (29).

3. Dispositif selon la revendication 1 ou 2, caractérisé en ce que le boîtier (25) du module de capteur (M) comporte un bouton de fixation élastique (45) sur son côté tourné vers une plaque de base (30), ce bouton appliquant de manière étanche la partie de mélangeur (29) échangeable, après sa mise en place dans le boîtier (25), en exerçant sa pression dans la direction de la chambre de mesure (8).

4. Dispositif selon l'une des revendications 1 à 3, caractérisé en ce que la partie de mélangeur (29) comporte une pièce de fermeture (40) qui ferme la chambre de mélange (5) et possède un perçage central (41) rendu étanche vis-à-vis du canal (28) de la chambre de mesure (8) et la pièce de fermeture (40) comporte un prolongement cylindrique (43) qui pénètre dans la chambre de mesure (5).

5. Dispositif selon l'une des revendications 1 à 4, caractérisé en ce que l'embouchure du canal d'agent réactif (7) dans le canal d'échantillons (4) se fait juste en amont de la chambre de mélange (5) selon le sens de l'écoulement de l'échantillon.

6. Dispositif selon l'une des revendications 2 à 5, caractérisé en ce qu'entre le palier fine (23) du bloc de capteurs (3) et le module de capteur (M) pour la mesure indirecte des composants de l'échantillon il est prévu au moins un module de capteurs (E₁, E₂, E₃) pour la mesure directe des composants de l'échantillon, module dont un branchement étanche se fait sur le canal d'échantillons (4) du module de capteurs voisin (M, E₁, E₂) et dont l'autre branchement étanche se fait sur le segment de canal (31) dans l'appui (23).

7. Dispositif selon l'une des revendications 2 à 6, caractérisé en ce que si l'on utilise au moins une électrode éléctrochimique (27) dans l'un des modules de capteur (E₁, E₂, E₃, M), le serpent de canal (31) du palier (23) est en un matériau conducteur d'électricité et est relié à un câble électrique (46).

8. Dispositif selon l'une des revendications 1 à 7, caractérisé en ce que le module de capteur (M) comporte un capteur de CO₂ pour mesurer la teneur globale en CO₂ d'un échantillon sanguin.

9. Dispositif selon l'une des revendications 6 à 8, comportant une installation d'introduction (1) de fluide échantillon et de fluide normalisé qui peut être reliée au canal d'échantillons (4) du module de capteurs (E₁, E₂, E₃, M), des réservoirs (12, 13) pour le fluide normalisé et une pompe d'alimentation pour fournir les différents fluides, dispositif caractérisé en ce que le tuyau (6) qui relie le réservoir d'agent réactif (R) au canal d'agent réactif (7) du module de capteur (M) ainsi que le tuyau (2) qui va de l'installation d'entrée (1) au canal d'échantillons (4) du module de capteur (M) passent par une pompe péristaltique (11) commune.

10. Dispositif selon la revendication 9, caractérisé en ce que le rapport de mélange nécessaire à la réaction entre l'échantillon et l'agent réactif est défini par le rapport des sections (D₁, D₂) des tuyaux (6, 2) allant au canal d'agent réactif (7) et au canal d'échantillons (4).

11. Dispositif selon la revendication 9 ou 10, caractérisé en ce que lorsqu'on utilise au moins un capteur électrochimique (27) dans l'un des modules de capteurs (E₁, E₂, E₃, M) on a une électrode de référence (21) dans le canal d'agent réactif (7).
